(19) Europäisches Patentamt
European Patent Office
Office européen des brevets

(11) Veröffentlichungsnummer: **0 227 918**
**B1**

(12) # EUROPÄISCHE PATENTSCHRIFT

(45) Veröffentlichungstag der Patentschrift: **14.12.88**

(51) Int. Cl.⁴: **C 07 F 9/42**

(21) Anmeldenummer: **86115298.1**

(22) Anmeldetag: **05.11.86**

(54) **Verfahren zur Herstellung von Phosphonsäuredichloriden.**

(30) Priorität: **26.11.85 DE 3541627**

(43) Veröffentlichungstag der Anmeldung: **08.07.87 Patentblatt 87/28**

(45) Bekanntmachung des Hinweises auf die Patenterteilung: **14.12.88 Patentblatt 88/50**

(84) Benannte Vertragsstaaten: **BE CH DE FR GB IT LI NL**

(56) Entgegenhaltungen:
**DE-A-2 636 270**
**FR-A-2 141 962**
**US-A-4 213 922**

(73) Patentinhaber: **HOECHST AKTIENGESELLSCHAFT, Postfach 80 03 20, D-6230 Frankfurt am Main 80 (DE)**

(72) Erfinder: **Pieper, Werner, Dr., Am Käferbruch 14, D-5014 Kerpen (DE)**

**EP 0 227 918 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Vorliegende Erfindung betrifft ein Verfahren zur Herstellung von Phosphonsäuredichloriden der allgemeinen Formel I

$$R - \underset{\underset{O}{\|}}{P}Cl_2 \qquad (I)$$

in der R für eine geradkettige oder verzweigte, gegebenenfalls halogensubstituierte Alkyl-, Alkenyl-, Aralkyl- oder Arylgruppe mit 1 bis 12 C-Atomen steht, durch Umsetzung von Thionylchlorid mit einem Phosphonsäuredialkylester der allgemeinen Formel II

$$R - \underset{\underset{O}{\|}}{P}(OR')_2 \qquad (II)$$

in der R die obige Bedeutung zukommt und R' für eine geradkettige oder verzweigte, gegebenenfalls halogensubstituierte Alkylgruppe mit 1 bis 4 C-Atomen steht, in Gegenwart eines Katalysators.

Es ist bekannt, Phosphonsäuredichloride der allgemeinen Formel I durch Umsetzung der entsprechenden Ester der allgemeinen Formel II mit Thionylchlorid herzustellen (Houben Weyl "Methoden der organischen Chemie" E2, Seite 331 (1982) Verlag G. Thieme, Stuttgart). Der Zusatz von Aminen oder Amiden wie Triethylamin, Pyridin oder Dimethylformamid beschleunigt dabei die Umsetzung und führt etwa bei der Herstellung von Methanphosphonsäuredichlorid zu einer Steigerung der Ausbeute auf 94 % nach Destillation gegenüber 80 % ohne Katalysatorzusatz (US-PS-4 213 922).

Nachteil dieser bekannten Arbeitsweise ist, daß trotz des Katalysatorzusatzes relativ lange Reaktionszeiten für die Umsetzungen benötigt werden. So ist etwa für die Herstellung von 1 Mol Methanphosphonsäuredichlorid aus Methanphosphonsäuredimetylester und Thionylchlorid in Gegenwart von Dimethylformamid als Katalysator nach einer zweistündigen Dosierzeit noch eine 7,5-stündige Reaktionsphase bei Siedetemperatur notwendig, um eine quantitative Umsetzung zu erreichen.

Ein weiterer Nachteil dieses Verfahrens liegt darin, daß Stoffe als Katalysatoren benutzt werden, die auf Grund ihres relativ hohen Dampfdrucks bei der Reinigung der Phosphonsäuredihalogenide durch Destillation zu Verunreinigungen der Destillate führen können.

Aufgabe der vorliegenden Erfindung war es daher, katalytisch wirksame Stoffe für die Herstellung von Phosphonsäuredichloriden durch Umsetzung von Phosphonsäurediestern mit Thionylchlorid zu finden, welche die Umsetzungszeiten deutlich verkürzen, hohe Ausbeuten liefern und praktisch nicht flüchtig sind, so daß der Katalysator das Produktdestillat nicht verunreinigt, sondern im Destillationsrückstand verbleibt und zusammen mit diesem Rückstand für weitere Reaktionsansätze genutzt werden kann.

Überraschenderweise wurde nun gefunden, daß sich diese Aufgabe lösen läßt, wenn man in dem eingangs beschriebenen Verfahren als Katalysator Verbindungen der allgemeinen Formeln III, IV oder V

$$R^1R^2R^3R^4PX \qquad (III)$$
$$R^2R^2R^3P \qquad (IV)$$
$$R^1R^2P^3PO \qquad (V)$$

einsetzt, in denen $R^1$, $R^2$ und $R^3$ für gleiche oder verschiedene Alkyl- oder Arylgruppen mit 1 bis 8 C-Atomen stehen, X Chlor oder Brom bedeutet, $R^4$ Gleich $R^1$ bis $R^3$ oder Chlor oder Brom ist.

Vorzugsweise wird als Verbindung der allgemeinen Formel III Tetrabutylphosphoniumchlorid oder -bromid, als Verbindung der allgemeinen Formel IV Triphenylphosphin und als Verbindung der allgemeinen Formel V Trioctylphosphanoxid als Katalysator verwendet.

Es hat sich als vorteilhaft erwiesen, Phosphonsäuredialkylester, Thionylchlorid und Katalysator im Stoffmengenverhältnis 1 : 2 bis 3 : 0,001 bis 0,1, insbesondere in einem Stoffmengenverhältnis von 1 : 2,5 : 0,01 einzusetzen und die Umsetzung bei einer Temperatur von 70 bis 150°C und bei Normaldruck durchzuführen.

Dabei empfiehlt es sich, eine Mischung von Phosphonsäuredialkylester und Katalysator vorzulegen und das Thionylchlorid der auf ca. 80°C erhitzten Mischung zuzugeben, oder umgekehrt Thionylchlorid zusammen mit dem Katalysator vorzulegen, zum Sieden zu erhitzen und dann den Phosphorsäureester zu dosieren.

Die bei der Umsetzung entstehenden gasförmigen Reaktionsprodukte können einer Verbrennung bzw. einer Natronlaugewäsche zugeführt werden. An das Dosieren der Ausgangsprodukte schließt sich eine Phase der Nachreaktion unter Rückflußbedingungen bei Temperaturen bis maximal 150°C an. Danach werden überschüssiges Thionylchlorid und eventuell noch gelöste gasförmige Reaktionsprodukte im Vakuum entfernt. Das zurückbleibende Phosphonsäuredichlorid kann gegebenenfalls durch Destillation gereinigt werden, wobei der dabei anfallende Destillationsrückstand die eingesetzte Katalysatormenge praktisch quantitativ enthält und damit für weitere Ansätze genutzt werden kann.

Gegenüber den bekannten Stoffen erweisen sich die erfindungsgemäß eingesetzten Verbindungen als außerordentlich effektive Katalysatoren, was in deutlich verkürzten Reaktionszeiten und quantitativ ablaufenden

Umsetzungen der Phosphonsäurediester zu Phosphonsäuredichloriden zum Ausdruck kommt.

Die auf diese Weise kostengünstig zugänglichen Phosphonsäuredichloride sind wertvolle, reaktive Zwischenprodukte für die Synthese zahlreicher Pflanzenschutz- und Flammschutzmittel.

Das erfindungsgemäße Verfahren sei durch die folgenden Beispiele näher erläutert.

**Beispiel 1**

In einem 500-ml-Mehrhalskolben mit Rührer, Tropftrichter, Rückflußkühler und Innenthermometer wird eine Mischung aus 297,5 g (2,5 mol) Thionylchlorid und 2,95 g (0,01 mol) Tetrabutylphosphoniumchlorid vorgelegt und zum Sieden erhitzt. Innerhalb von 2 Stunden werden 124 g (1 mol) Methanphosphonsäuredimethylester zugetropft. Zum Ende der Dosierzeit ist die Temperatur der Reaktionsmischung bei fortgesetzter Wärmezufuhr auf 94° C gestiegen. 31-P-NMRspektroskopisch lassen sich zu diesem Zeitpunkt Methanphosphonsäuredichlorid (23 P-%), Methanphosphonsäuremethylesterchlorid (54 P-%), Polymethanphosphonsäureester und -chloride (22 P-%) neben Tetrabutylphosphoniumchlorid (1 P-%) nachweisen.

Eine 2 stündige Nachreaktion schließt sich an, in welcher die Temperatur der Reaktionsmischung langsam auf 140° C gesteigert werden kann. Das Rohprodukt besteht zu dieser Zeit laut 31-P-NMR-Spektrum aus 99 P-% Methanphosphonsäuredichlorid neben 1 P-% Tetrabutylphosphoniumchlorid.

Durch Destillation wird reines Methanphosphonsäuredichlorid isoliert, während der Destillationsrückstand neben Methanphosphonsäuredichlorid quantitativ das als Katalysator eingesetzte Tetrabutylphosphoniumchlorid enthält.

**Beispiel 2**

Analog Beispiel 1 werden 297,5 g (2,5 mol) Thionylchlorid mit 124 g (1 mol) Methanphosphonsäuredimethylester in Gegenwart von 3,4 g (0,01 mol) Tetrabutylphosphoniumbromid umgesetzt. Nach einer zweistündigen Dosierzeit und einer zweistündigen Nachreaktion bis 140° C besteht das Reaktionsprodukt aus 99 P-% Methanphosphonsäuredichlorid neben 1 P-% Tetrabutylphosphoniumbromid, von dem es durch Destillation abgetrennt wird.

**Beispiel 3**

Analog Beispiel 1 werden 119 g (1 mol) Thionylchlorid mit 125 g (0,5 mol) Octanphosphonsäurediethylester in Gegenwart von 1,5 g (0,005 mal) Tetrabutylphosphoniumchlorid umgesetzt. Nach einer dreistündigen Nachreaktionsphase besteht das Rohprodukt laut 31-P-NMR-Spektrum zu 99 P-% aus Octanphosphonsäuredichlorid neben 1 P-% Tetrabutylphosphoniumchlorid, von dem durch Destillation abgetrennt wird.

**Beispiel 4**

Analog Beispiel 1 werden 119 g (1 mol) Thionylchlorid mit 125 g (0,5 mal) 2-Chlorethanphosphonsäurebis-(2-chloroethylester) und Zusatz von 1,5 g (0,005 mal) Tetrabutylphosphoniumchlorid umgesetzt. Das Rohprodukt enthält laut 31-P-NMR-Spektrum 82 P-% 2-Chlorethanphosphonsäuredichlorid, das durch Destillation von Katalysator abgetrennt wird.

**Beispiel 5**

Analog Beispiel 1 werden 297,5 g (2,5 mol) Thionylchlorid zusammen mit 8,9 g (0,01 mol) Trioctylphosphonoxid vorgelegt, zum Sieden erhitzt und innerhalb von einer Stunde 124 g (1 mol) Methanphosphonsäuredimethylester zugesetzt. Nach einer weiteren Stunde bei fortgesetzter Wärmezufuhr wird eine Reaktionstemperatur von 137° C erreicht. Das Rohprodukt besteht laut 31-P-NMR-Spektrum aus 99 P-% Methanphosphonsäuredichlorid neben 1 P-% Dichlortrioctylphosphan, von welchem es durch Destillation quantitativ abgetrennt wird.

**Beispiel 6**

Analog Beispiel 1 werden 297,5 g (2,5 mol) Thionylchlorid zusammen mit 2,6 g (0,01 mol) Triphenylphosphan vorgelegt, zum Sieden erhitzt und 124 g (1 mol) Methanphosphonsäuredimethylester zugetropft. 2 Stunden nach dem Dosierende ist die Reaktionstemperatur bei fortgesetzter Wärmezufuhr auf 140° C angestiegen. Das Rohprodukt besteht zu diesem Zeitpunkt laut 31-P-NMR-Spektrum zu 99 P-% aus Methanphosphonsäuredichlorid neben 1 P-% Katalysator.

**Beispiel 7** (Vergleichsbeispiel)

Analog Beispiel 1 werden zu 297,5 g (2,5 mol) Thionylchlorid in der Siedehitze 124 g (1 mol) Methanphosphonsäuredimethylester ohne Katalysatorzusatz innerhalb von 2 Stunden dosiert.

Im Vergleich zu Beispiel 1 lassen sich nach Beendigung der Dosierung folgende Phosphonsäurederivate 31-P-NMRspektroskopisch nachweisen: Methanphosphonsäuredichlorid (4,4 P-%), Methanphosphonsäuremethylesterchlorid (46,2 P-%) Polymethanphosphonsäuremethylester und -chloride (49,4 P-%). Nach einer 7 stündigen Nachreaktion bei Siedetemperatur besteht das Reaktionsprodukt aus Methanphosphonsäuredichlorid (13 P-%) Methanphosphonsäuremethylesterchlorid (0,3 P-%) und Polymethanphosphonsäurechloriden (86,7 P-%).

**Beispiel 8** (Vergleichsbeispiel)

Dem Stand der Technik entsprechend werden analog Beispiel 1 zu einer Mischung von 297,5 g (2,5 mol) Thionylchlorid und 0,8 g (0,01 mol) Dimethylformamid in der Siedehitze 124 g (1 mol) Methanphosphonsäuredimethylester innerhalb von 2 Stunden dosiert. Im Vergleich zu Beispiel 1 besteht nach der Dosierung das Reaktionsprodukt laut 31-P-NMR-Spektrum aus Methanphosphonsäuredichlorid (18,9 P-%). Methanphosphonsäuremethylesterchlorid (76,9 P-%) Polymethanphosphonsäuremetylester und -chloride (4,2 P-%) Während in Beispiel 1 nach einer 2 stündigen Nachreaktion quantitativ Methanphosphonsäuredichlorid entstanden ist, sind zum selben Zeitpunkt hier folgende Phosphonsäurederivate 31-P-NMRspektroskopisch nachweisbar Methanphosphonsäuredichlorid (51,5 P-%) Methanphosphonsäuremethylesterchlorid (30,9, P-%) Polymethanphosphonsäuremethylester und -chloride (17,6 P-%).

**Patentansprüche**

1. Verfahren zur Herstellung von Phosphonsäuredichloriden der allgemeinen Formel I

$$R - \underset{\underset{O}{\|}}{P}Cl_2 \qquad (I)$$

in der R für eine geradkettige oder verzweigte, gegebenenfalls halogensubstituierte Alkyl-, Alkenyl-, Aralkyl- oder Arylgruppe mit 1 bis 12 C-Atomen steht, durch Umsetzung von Thionylchlorid mit einem Phosphonsäuredialkylester der allgemeinen Formel II

$$R - \underset{\underset{O}{\|}}{P}(OR')_2 \qquad (II)$$

in der R oie obige Bedeutung zukommt und R' für eine geradkettige oder verzweigte, gegebenenfalls halogensubstituierte Alkylgruppe mit 1 bis 4 C-Atomen steht, in Gegenwart eines Katalysators, dadurch gekennzeichnet, daß man als Katalysator Verbindungen der allgemeinen Formeln III, IV oder V

$R^1R^2R^3R^4PX$ (III)
$R^2R^2R^3P$ (IV)
$R^1R^2P^3PO$ (V)

einsetzt, in denen $R^1$, $R^2$ und $R^3$ für gleiche oder verschiedene Alkyl- oder Arylgruppen mit 1 bis 8 C-Atomen stehen, X Chlor oder Brom bedeutet, $R^4$ gleich $R^1$ bis $R^3$ oder Chlor oder Brom ist.

2. Verfahren nach Anspruch 1, dadurch gekennzeichnet, daß man als Verbindung der allgemeinen Formel III Tetrabutylphosphoniumchlorid oder -bromid als Katalysator einsetzt.

3. Verfahren nach Anspruch 1, dadurch gekennzeichent, daß man als Verbindung der allgemeinen Formel IV Triphenylphosphin als Katalysator einsetzt.

4. Verfahren nach Anspruch 1, dadurch gekennzeichnet, daß man als Verbindung der allgemeinen Formel V Trioctylphosphanoxid als Katalysator einsetzt.

5. Verfahren nach einem der Ansprüche 1 bis 4, dadurch gekennzeichnet, daß man Phosphonsäuredialkylester, Thionylchlorid und Katalysator im Stoffmengenverhältnis 1 : 2 bis 3 : 0,001 bis 0,1 einsetzt.

6. Verfahren nach Anspruch 5, dadurch gekennzeichnet, daß man Phosphonsäuredialkylester, Thionylchlorid und Katalysator im Stoffmengenverhältnis 1 : 2,5 : 0,01 einsetzt.

7. Verfahren nach einem der Ansprüche 1 bis 6, dadurch gekennzeichnet, daß man die Umsetzung bei einer Temperatur von 70 bis 150° C und bei Normaldruck durchführt.

**Claims**

1. A process for the preparation of a phosphonic dichloride of Formula I

$$R-\underset{\underset{O}{\|}}{P}Cl_2 \quad (I)$$

in which R represents a straight-chain or branched, optionally halogen-substituted alkyl, alkenyl, aralkyl or aryl group having 1 to 12 carbon atoms, by reacting thionyl chloride with a dialkyl phosphonate of the formula II

$$R-\underset{\underset{O}{\|}}{P}(OR')_2 \quad (II)$$

in which R has the above meaning and R' represents a straight-chain or branched, optionally halogen-substituted alkyl group having 1 to 4 carbon atoms, in the presence of a catalyst, wherein the catalyst employed is a compound of the formula III, IV or V

$R^1R^2R^3R^4PX$ (III)
$R^2R^2R^3P$ (IV)
$R^1R^2P^3PO$ (V)

in which $R^1$, $R^2$ and $R^3$ represent identical or different alkyl or aryl groups having 1 to 8 carbon atoms, X denotes chlorine or bromine, and $R^4$ is identical with $R^1$ to $R^3$ or is chlorine or bromine.

2. The process as claimed in claim 1, wherein the compound of the formula III employed as catalyst is tetrabutylphosphonium chloride or bromide.

3. The process as claimed in claim 1, wherein the compound of the formula IV employed as catalyst is triphenylphosphine.

4. The process as claimed in claim 1, wherein the compound of the formula V employed as catalyst is trioctylphosphine oxide.

5. The process as claimed in any of claims 1 to 4, wherein the dialkyl phosphonate, the thionyl chloride and the catalyst are employed in the amount ratio 1 : 2 to 3 : 0.0001 to 0.1.

6. The process as claimed in claim 5, wherein the dialkyl phosphonate, the thionyl chloride and the catalyst are employed in the amount ratio 1 : 2.5 : 0.01.

7. The process as claimed in any of claims 1 to 6, wherein the reaction is carried out at a temperature from 70 to 150°C and at atmospheric pressure.

**Revendications**

1. Procédé de préparation de dichlorures d'acides phosphoniques de formule générale I

$$R-\underset{\underset{O}{\|}}{P}Cl_2 \quad (I)$$

dans laquelle R représente un groupe alkyle à chaîne droite ou ramifiée éventuellement substitué par des halogènes, alcényle, aryle ou aralkyle en $C_1$-$C_{12}$, par réaction du chlorure de thionyle avec un phosphonate de dialkyle de formule générale II

$$R-\underset{\underset{O}{\|}}{P}(OR')_2 \quad (II)$$

dans laquelle R a les significations indiquées ci-dessus et R' représente un groupe alkyle à chaîne droite ou ramifiée en $C_1$-$C_4$ éventuellement substitué par des halogènes, en présence d'un catalyseur, caractérisé en ce que l'on utilise en tant que catalyseurs des composés de formule générale III, IV ou V

$R^1R^2R^3R^4PX$ (III)
$R^2R^2R^3P$ (IV)
$R^1R^2P^3PO$ (V)

dans lesquelles $R^1$, $R^2$ et $R^3$, ayant des significations identiques ou différentes, représentent des groupes alkyle ou aryle en $C_1$-$C_8$, X représente le chlore ou le brome, $R^4$ a les mêmes significations que $R^1$ à $R^3$ ou représente le chlore ou le brome.

2. Procédé selon la revendication 1, caractérisé en ce que l'on utilise comme catalyseur, en tant que composé de formule générale III, le chlorure ou le bromure de tétrabutylphosphonium.

3. Procédé selon la revendication 1, caractérisé en ce que l'on utilise comme catalyseur, en tant que composé de formule générale IV, la triphénylphosphine.

4. Procédé selon la revendication 1, caractérisé en ce que l'on utilise comme catalyseur, en tant que composé de formule générale V, l'oxyde de trioctylphosphane.

5. Procédé selon l'une des revendications 1 à 4, caractérisé en ce que l'on met en oeuvre le phosphonate de dialkyle, le chlorure de thionyle et le catalyseur dans des proportions relatives de 1 : 2 à 3 : 0,001 à 0,1.

6. Procédé selon la revendication 5, caractérisé en ce que l'on met en oeuvre le phosphonate de dialkyle, le chlorure de thionyle et le catalyseur dans des proportions relatives de 1 : 2,5 : 0,01.

7. Procédé selon l'une des revendications 1 à 6, caractérisé en ce que l'on effectue la réaction à une température de 70 à 150°C et à pression normale.